# EUROPÄISCHE PATENTSCHRIFT

(11) **EP 3 249 767 B1**
(45) Veröffentlichungstag und Bekanntmachung des Hinweises auf die Patenterteilung: **26.01.2022**
(21) Anmeldenummer: 17166536.7
(22) Anmeldetag: 13.04.2017
(51) Int. Cl.: H02H 7/085, E05F 15/603, E05F 15/40, H02P 6/16, H02P 31/00

(54) **SCHALTVORRICHTUNG ZUM SCHALTEN EINES ELEKTRISCHEN MOTORS**
SWITCHING DEVICE FOR SWITCHING AN ELECTRIC MOTOR
DISPOSITIF DE COUPURE D'UN MOTEUR ÉLECTRIQUE

(30) Priorität: 29.04.2016 DE 102016108007
(43) Veröffentlichungstag der Anmeldung: 29.11.2017
(73) Patentinhaber: Lock Antriebstechnik GmbH, 88521 Ertingen (DE)
(72) Erfinder: Lock, Frank, 88521 Ertingen (DE); Niederer, Patrick, 88499 Riedlingen-Zwiefaltendorf (DE); Fluhr, Tobias, 88521 Ertingen (DE)
(74) Vertreter: Otten, Roth, Dobler & Partner mbB Patentanwälte

(56) Entgegenhaltungen:
- WO-A1-2009/146738
- WO-A1-2015/133291
- GB-A- 2 289 351
- US-A- 4 338 553
- US-A1- 2013 133 447

## Beschreibung

Die Erfindung betrifft eine Schaltvorrichtung zum Schalten eines elektrischen Motors, sowie ein Getriebe, ein Motor, ein Getriebemotor oder ein Antriebssystem mit einer solchen Schaltvorrichtung.

### Stand der Technik

Schaltvorrichtungen zum Schalten eines elektrischen Motors, insbesondere eines Getriebemotors sind in verschiedensten Ausführungen bekannt.

Eine Schaltvorrichtung zum Schalten eines Antriebsmotors zum Heben und Senken eines Autofensters ist aus der GB 2 289 351 A bekannt. Eine weitere Schaltvorrichtung ist aus der WO 2015/133291 A1 bekannt.

Eine bekannte Schaltvorrichtung ist zum Beispiel als ein mechanischer oder elektronischer Schalter ausgebildet, der zwei Schaltzustände zum Schalten einer elektrischen Stromversorgung des Motors bereitstellt. Der Schalter ist dabei z.B. direkt auf einem Gehäuse des Getriebemotors angebracht.

Der Schalter wirkt hierbei z.B. unabhängig von einem Zustand des durch den Motor angetriebenen Bauteils.

### Aufgabe und Vorteile der Erfindung

Der Erfindung liegt die Aufgabe zu Grunde, eine alternative Schaltvorrichtung zum Schalten eines elektrischen Motors bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Schaltvorrichtung zum Schalten eines elektrischen Motors aus, wobei die Schaltvorrichtung an einem durch den Motor drehangetriebenen Bauelement angeordnet ist.

Der Motor ist vorteilhafterweise als Getriebemotor ausgebildet. Das drehangetriebene Bauelement ist beispielsweise Bestandteil des Getriebemotors, z.B. eine Welle oder ein Zahnrad des Getriebemotors.

Das Bauelement positioniert und/oder verschiebt beispielsweise ein Antriebssystem zum Öffnen oder Schließen von Gebäudeöffnungen, wie z.B. Fenster, Dachöffnungen, Flügel oder flexible Wände, oder zum Öffnen und Schließen von Schattierungs- oder Lüftungsanlagen oder zum Heben und Senken von Lasten. Das Bauelement kann auch Bestandteil eines solchen Antriebssystems sein.

Denkbar ist auch, dass das Bauelement ein Antriebssystem zum Öffnen oder Schließen von Türen oder Tore antreibt.

Die Antriebssysteme werden beispielsweise im Gartenbau, im Stallbau und/oder im Glasbau, beispielsweise in Gewächshäusern, eingesetzt. Die Antriebssysteme zum Positionieren, insbesondere zum Heben und/oder Senken von Lasten finden unter anderem Verwendung im Maschinenbau.

Erfindungsgemäß sind innerhalb eines einzigen Gehäuses eine berührungslose, absolute Positionsmesseinrichtung, eine Auswerteeinheit zum Auswerten von Positionssignalen und eine Ausgabeeinheit zur Ausgabe einer Schaltinformation zum mittelbaren Schalten und/oder zum unmittelbaren Schalten des Motorstroms in Abhängigkeit eines Positionssignals vorgesehen.

Die Positionsmesseinrichtung erfasst eine Stellung des Bauelements absolut. Bevorzugterweise ist die Positionsmesseinrichtung derart aufgebaut, dass sie aufgrund einer Magnetfeldänderung eine Änderung der Stellung des Bauelements erfasst.

In einer vorteilhaften Ausführungsform der Schaltvorrichtung ist die Ausgabeeinheit dazu vorgesehen eine Steuerungsspannung des Motors in Abhängigkeit eines Positionssignals zu schalten. Die Steuerspannung ist dazu vorgesehen beispielsweise ein elektrisches Relais oder einen Frequenzumrichter zu steuern und/oder mit einer Schaltinformation zu beliefern, wobei das Relais oder der Frequenzumrichter dazu ausgelegt ist, den Motorstrom zu schalten.

Die Ausgabeeinheit ist insbesondere zum Abschalten des Motorstroms und/oder einer Steuerspannung des Motors in Abhängigkeit eines Positionssignals vorgesehen. Die Ausgabeeinheit kann somit mittelbar oder unmittelbar den Motorstrom schalten.

Vorteilhafterweise ist die Schaltvorrichtung an einer durch den Motor angetriebenen Welle angeordnet, insbesondere im Gehäuse des Antriebs und/oder im Gehäuse des Motors bzw. im Gehäuse des Getriebemotors.

In einer vorteilhaften Modifikation der Schaltvorrichtung ist die Positionsmesseinrichtung dazu ausgestaltet, eine Umdrehung des drehangetriebenen Bauelements zu Erfassen.

Vorteilhafterweise erfasst die Positionsmesseinrichtung eine einzige, insbesondere vollständige Umdrehung und/oder eine Vielzahl von Umdrehungen des drehangetriebenen Bauelements.

Erfindungsgemäß ist die Positionsmesseinrichtung derart ausgestaltet, dass sie bei abgeschalteter externer Versorgungsenergie eine Position des drehangetriebenen Bauelements absolut erfasst.

Vorteilhafterweise meldet die Positionsmesseinrichtung bei aktivierter Versorgungsenergie die aktuelle Position des Bauelementes an die Auswerteeinheit.

Erfindungsgemäß umfasst die Schaltvorrichtung ein gepuffertes internes elektrisches Energiesystem. Beispielsweise umfasst die Schaltvorrichtung und/oder die Positionsmesseinrichtung und/oder der Motor ein gepuffertes internes elektrisches Energiesystem, z.B. eine Batterie, einen Akku oder einen Kondensator. Dadurch ist z.B. der Motor und/oder die Schaltvorrichtung auch bei abgeschalteter Versorgungsenergie zumindest für eine gewisse Zeit weiter funktionsfähig. Beispielsweise ist die Schaltvorrichtung dazu ausgelegt, eine Abschaltung einer externen Versorgungsenergie zu detektieren. Weiter kann die Schaltvorrichtung dazu ausgelegt sein, bei Detektion einen Abschaltung der externen Versorgungsenergie den Motor derart zu kommandieren, sodass der Motor mit der Energie seines internen Energiesystems die, am Motor angeordneten Komponenten derart antreibt, dass diese in einer Sicherheitsposition positionierbar sind.

Erfindungsgemäß ist die Positionsmesseinrichtung dazu ausgestaltet, sich aufgrund einer Drehbewegung des Bauelements selbst mit Energie zu versorgen.

Beispielsweise gewinnt die Positionsmesseinrichtung aufgrund von magnetischer Induktion Energie, z.B. durch eine Drehbewegung des Bauelements. Die Positionsmesseinrichtung ist beispielsweise dazu ausgelegt, bei abgeschalteter externer und interner Energiequelle eine Anzahl von Drehbewegungen des Bauelements zu detektieren und zu speichern.

Vorteilhafterweise ist die Ausgabeeinheit dazu ausgelegt, abhängig von einer Position des Bauelements, eine ein-phasige und/oder mehr-phasige Energieversorgung des elektrischen Motors über ein Schaltelement zu Schalten.

Beispielsweise ist die Ausgabeeinheit dazu ausgelegt Versorgungsspannungen von 230V AC, 24V AC, 48V AC und/oder 24V DC direkt, insbesondere bei einphasiger Versorgungsspannung und/oder über das Schaltelement, beispielsweise einen Schalter und/oder ein Relais und/oder einen Frequenzumrichter, vorteilhaft bei mehrphasiger Versorgungsspannung zu schalten.

Des Weiteren wird vorgeschlagen, dass die Schaltvorrichtung dazu ausgelegt ist, eine Stellung des Bauelements auszugeben.

In einer vorteilhaften Ausführungsform ist die Schaltvorrichtung dazu ausgelegt eine Endposition, auszugeben. Bevorzugterweise gibt die Schaltvorrichtung ein analoges Potenzial, insbesondere einen Potenzialbereich z.B. 10V, relativ zu einer Erde aus, wobei beispielsweise ein Potenzialunterschied von 5V gegenüber der Erde einer Mittelstellung des Bauelements entspricht.

Denkbar ist auch, dass die Schaltvorrichtung eine Datenschnittstelle besitzt. Die Ausgabe der Stellung des Bauelements kann über eine analoge und/oder digitale Datenschnittstelle erfolgen. Die Datenschnittstelle ist insbesondere BUS-fähig, z.B. CANopen, Ethercat, Profibus, Profinet, MODBus, DACNET, KNX und/oder IO-Link.

Die Datenschnittstelle ist z.B. kabelgebunden. Beispielsweise ist die Datenschnittstelle als eine Netzwerkschnittstelle mit einem Ethernet- oder Feldbusanschluss und/oder kabellos z.B. nach einem WLAN-Standard oder Bluetooth-Standard ausgebildet.

Überdies ist es vorteilhaft, dass die Schaltvorrichtung ein Tastelement umfasst, mittels welchem ein Monteur der Schaltvorrichtung, bei einer Installation der Schaltvorrichtung, eine Position, insbesondere Endposition des Bauelements anlernen kann.

Denkbar ist auch, dass die Schaltvorrichtung Positionen des Bauelementes selbsttätig ermittelt, zum Beispiel in einer Lernfahrt. Beispielsweise kommandiert die Schaltvorrichtung den Motor so lange in eine der beiden Drehrichtungen bis die Schaltvorrichtung ein Signal erhält, beispielsweise ausgelöst durch einen Endschalter oder eine Erhöhung des Motorstroms und/oder einen Abfall der Drehzahl, und hieraus auf die Positionen des Bauelements schließt.

Auch ist es vorstellbar, dass die Schaltvorrichtung derart ausgestaltet ist, dass eine Position des Bauelements über eine Datenverbindung von außen durch einen Nutzer und/oder durch ein Datensystem vorgebbar ist. Durch die Vorgabe einer Sollposition des Bauelements von außen kann die Schaltvorrichtung befehligt werden z.B. den Motorstrom derart zu schalten, dass das Bauelement an die Sollposition bewegt wird. Vorteilhafterweise kann über die Datenverbindung von außen, insbesondere der Schaltvorrichtung eine Geschwindigkeit des Bauelements vorgebbar sein.

In einer vorteilhaften Variante der Schaltvorrichtung ist die Energieversorgung des Motors durch die Schaltvorrichtung geführt.

Vorteilhafterweise umfasst die Schaltvorrichtung Anschlussmittel, z.B. Anschlussklemmen, für einen Anschluss einer Energieversorgungsleitung, beispielsweise einer Netzspannung und Anschlussorgane, um ein Versorgungskabel für den elektrischen Motor anzuordnen. In der Schaltvorrichtung wird die Versorgungsspannung z.B. ausgehend von den Anschlussmitteln über die Ausgabeeinheit zu den Anschlussorganen für das Versorgungskabel des Motors geführt, gegebenenfalls besitzt die Schaltvorrichtung einen Transformator.

Auch ist es von Vorteil, dass die Schaltvorrichtung, insbesondere die Auswerteeinheit, derart ausgestaltet ist, dass in einer Umdrehungsrichtung des Bauelements, insbesondere je Umdrehungsrichtung des Bauelements, zwei voneinander unabhängige Signalausgänge vorhanden sind.

Vorteilhafterweise schaltet die Auswerteeinheit bei Erreichen einer von der absoluten Positionsmesseinrichtung erhobenen Position und/oder Stellung des drehangetriebenen Bauelements den Schaltzustand eines Signalausgangs.

Beispielsweise besitzt die Schaltvorrichtung für jede Drehrichtung zwei voneinander unabhängige verwendbare und schaltbare, insbesondere physikalische Signalausgänge, beispielsweise Schaltausgänge. Schaltzustände der Signalausgänge werden insbesondere unabhängig voneinander generiert und zum Beispiel zur Schaltung von zwei Fahrzuständen verwendet und/oder zur Absicherung einer Endlagenabschaltung. Die beiden Signalausgänge einer Drehrichtung sind z.B. redundant ausgebildet.

Denkbar ist auch, dass die Schaltvorrichtung neben den physikalischen Signalausgängen einen weiteren insbesondere softwareinduzierten Signalausgang besitzt. Ein Schaltzustand des softwareinduzierten Signalausgangs wird vorteilhafterweise unabhängig von einem physikalischen, insbesondere unabhängig von einem weiteren Schaltzustand eines weiteren softwareinduzierten Signalausgangs generiert. Die physikalischen Signalausgänge werden beispielsweise zur Abschaltung einer Bewegung des Bauelements verwendet, insbesondere bei Erreichen einer Endlage. Der softwareinduzierte Schaltzustand schaltete beispielsweise einen Fahrzustand bei Erreichen einer Position des Bauelements. Vorteilhafterweise schaltet der softwareinduzierte Schaltzustand einen Fahrzustand derart, dass eine Bewegungsgeschwindigkeit des Bauelements verringert, oder erhöht wird. Hierdurch kann eine Anfahrbewegung von und/oder an einen Endpunkt definiert werden. Insbesondere ist hierdurch eine maximale Beschleunigung des Bauelements bei einer Anfahr- und/oder Bremsbewegung von und/oder an einen Endpunkt definierbar. Dadurch wird ein Verschleiß vorteilhaft aller Komponenten des Antriebssystems und/oder der angetriebenen Organe verringert.

In einer vorteilhaften Modifikation der Erfindung ist die Schaltvorrichtung derart ausgestaltet, dass sie die Sicherheitsanforderungsstufe 1 bzw. Sicherheits-Integritätslevel 1 (Safety Integrity Level 1, SIL 1) der Norm IEC 61508/IEC61511 erfüllt.

Eine bevorzugte Ausgestaltung der Erfindung ist ein Getriebe mit einer Schaltvorrichtung.

Das Getriebe kann in einem Getriebegehäuse ausgebildet sein, z.B. in einem Getriebegehäuse eines Getriebemotors und die Schaltvorrichtung kann im Getriebegehäuse angeordnet sein. Die Schaltvorrichtung mit dem Getriebe ist in diesem Fall in einem einzigen Gehäuse, dem Getriebegehäuse untergebracht. Die Schaltvorrichtung kann auch in einem separaten Gehäuse innerhalb des Getriebegehäuses ausgebildet sein.

Auch ist das Gehäuse der Schaltvorrichtung in einer vorteilhaften Ausgestaltung der Erfindung am Getriebegehäuse und/oder am Gehäuse des Motors bzw. Getriebemotors angeordnet, insbesondere grenzt das Gehäuse der Schaltvorrichtung an das Gehäuse des Motors und/oder an das Gehäuse des Getriebemotors und/oder an das Gehäuse des Getriebes an. Hierzu sind z.B. am Getriebegehäuse und z.B. am Gehäuse der Schaltvorrichtung entsprechende mechanische und/oder elektrische Verbindungsmittel ausgebildet. Das Gehäuse der Schaltvorrichtung kann somit Huckepack bzw. als Rucksackanordnung am Gehäuse des Motors und/oder am Gehäuse des Getriebemotors und/oder am Gehäuse des Getriebes ausgebildet sein.

Vorstellbar ist, dass die Schaltvorrichtung an oder auf einer Motorwelle zwischen Motor und Getriebe angeordnet ist. Bevorzugterweise ist die Schaltvorrichtung an einem Getriebe des Motors ausgebildet.

Eine vorteilhafte Ausführung der Erfindung ist ein Antriebssystem mit einer Schaltvorrichtung, einem Getriebemotor und einem vom Getriebemotor angetriebene Bauelemente.

Vorteilhafterweise ist die Auswerteeinheit dazu ausgestaltet, eine Zustandsüberwachung des Antriebssystems auszuführen, auszuwerten und danach ggf. eine Aktion, insbesondere durch die Ausgabeeinheit vorzunehmen.

### Beschreibung der Ausführungsbeispiele

Mehrere Ausführungsbeispiele werden anhand der nachstehenden schematischen Zeichnungen unter Angabe weiterer Einzelheiten und Vorteile näher erläutert:

Es zeigen:
- Figuren 1 bis 3: eine Ansicht auf eine Schaltvorrichtung, welche an einer Welle angeordnet ist, aus jeweils unterschiedlicher Perspektive,
- Figur 4: eine perspektivische Ansicht auf ein erfindungsgemäßes Antriebssystem,
- Figur 5: eine perspektivische Ansicht auf ein weiteres Antriebssystem und
- Figur 6: eine perspektivische Ansicht eines Gewächshaus mit Fensterelementen, welche durch ein Antriebssystem nach den Figuren 4 oder 5 angetrieben sind.

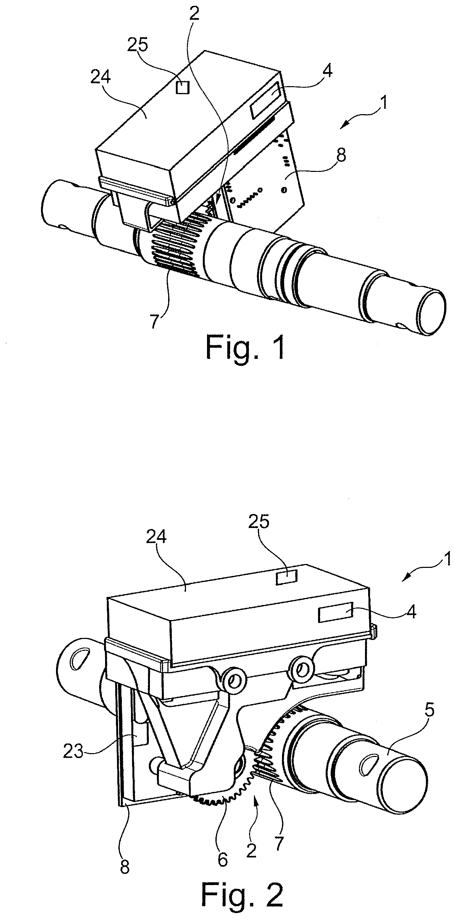

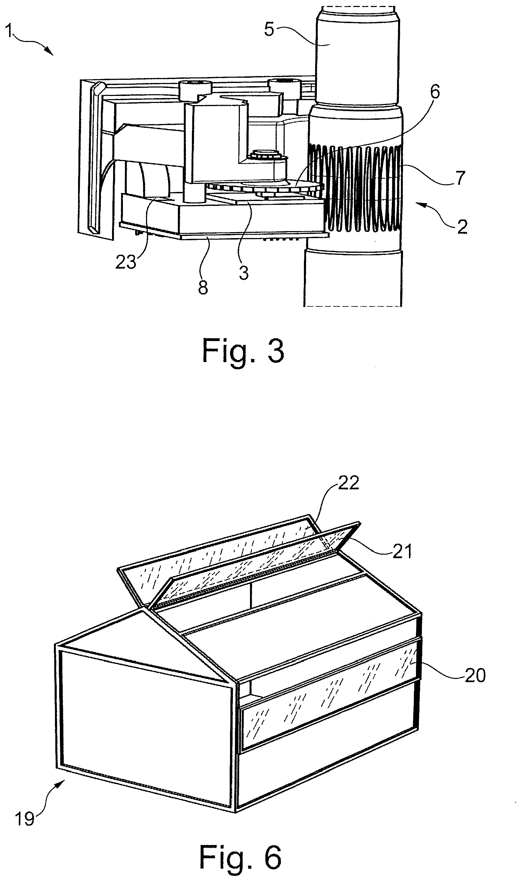

Eine Schaltvorrichtung 1 umfasst eine Positionsmesseinrichtung 2, eine Auswerteeinheit 3, eine Ausgabeeinheit 4 und einen Energiespeicher in Form eines Akkus 23. Die Schaltvorrichtung 1 ist an einer Welle 5 angeordnet und koppelt über ein Zahnrad 6 der Positionsmesseinrichtung 2 mit einem Ritzel 7 der Welle 5 (Figuren 1 bis 3).

Die Positionsmesseinrichtung 2, die Auswerteeinheit 3 und die Ausgabeeinheit 4 sind auf einer Platine 8 angeordnet. Die Platine 8 kann auch aus mehreren Platinenbauteilen bestehen (nicht gezeigt), welche miteinander elektrisch leitend verbunden sind.

An einer Oberseite 24 der Schaltvorrichtung 1 ist ein Tastelement 25 vorhanden, mittels welchem ein Monteur der Schaltvorrichtung 1, bei einer Installation der Schaltvorrichtung 1, eine Position, insbesondere Endposition der Welle 5 anlernen kann.

Des Weiteren ist die Schaltvorrichtung 1 beispielsweise derart kompakt ausgebildet, dass sie in einem Gehäuse des Motors und/oder des Getriebes anordenbar ist.

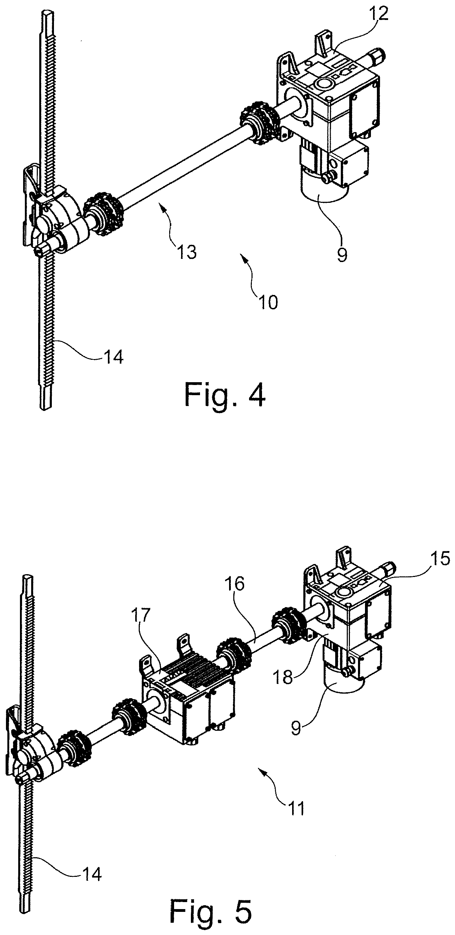

Ein Antriebssystem 10 umfasst den Elektromotor 9, ein Getriebegehäuse 12, in welchem ein Getriebe ausgebildet ist, über welches eine Welle 13 durch den Elektromotor 9 bewegbar ist. Im Getriebegehäuse 12 des Antriebssystems 10 ist zudem eine Schaltvorrichtung 1 an der Welle 13 angeordnet. Die Welle 13 treibt beispielsweise eine Zahnstange 14 an (Figur 4).

Ein weiteres Antriebssystem 11 umfasst ebenfalls den Elektromotor 9, ein weiteres Getriebegehäuse 15, in welchem ein Getriebe ausgebildet ist, über welches eine weitere Welle 16 durch den Elektromotor 9 bewegbar ist. In der Ausbildung des Antriebssystems 11 ist die Schaltvorrichtung 1 in einem vom Getriebegehäuse 15 separaten Vorrichtungsgehäuse 17 an der Welle 16 vorhanden (Figur 5).

Das Vorrichtungsgehäuse 17 kann beispielsweise auch direkt an eine Gehäuseseite 18 des Getriebegehäuses 15 anstoßend anschließen. Das Vorrichtungsgehäuse 17 kann beispielsweise mit dem Getriebegehäuse 15 mechanisch verbunden sein, beispielsweise verschraubt oder vernietet.

Das Antriebssystem 10, 11 ist z.B. in einem Gewächshaus 19 angebaut, um Fensterelemente 20 bis 22 zu bewegen, beispielsweise zu öffnen oder zu schließen.

### Bezugszeichenliste

- 1: Schaltvorrichtung
- 2: Positionsmesseinrichtung
- 3: Auswerteeinheit
- 4: Ausgabeeinheit
- 5: Welle
- 6: Zahnrad
- 7: Ritzel
- 8: Platine
- 9: Motor
- 10 - 11: Antriebssystem
- 12: Getriebegehäuse
- 13, 16: Welle
- 14: Zahnstange
- 15: Getriebegehäuse
- 17: Vorrichtungsgehäuse
- 18: Gehäuseseite
- 19: Gewächshaus
- 20 bis 22: Fensterelement
- 23: Akku
- 24: Oberseite
- 25: Tastelement

## Patentansprüche

1. Schaltvorrichtung (1) zum Schalten eines elektrischen Motors (9), wobei die Schaltvorrichtung (1) an einem durch den Motor (9) drehangetriebenen Bauelement (5, 13, 16) angeordnet ist, wobei innerhalb eines einzigen Gehäuses (12, 17) eine berührungslose, absolute Positionsmesseinrichtung (2), eine Auswerteeinheit (3) zum Auswerten von Positionssignalen und eine Ausgabeeinheit (4) zur Ausgabe einer Schaltinformation zum mittelbaren Schalten und/oder zum unmittelbaren Schalten des Motorstroms in Abhängigkeit eines Positionssignals vorgesehen sind, **dadurch gekennzeichnet, dass** die Positionsmesseinrichtung (2) dazu ausgebildet ist, sich aufgrund einer Drehbewegung des Bauelements (5, 13, 16) selbst mit Energie zu versorgen, sodass die Positionsmesseinrichtung (2) bei abgeschalteter externer Versorgungsenergie eine Position des drehangetriebenen Bauelements (5, 13, 16) absolut erfasst, wobei die Schaltvorrichtung (1) ein gepuffertes internes elektrisches Energiesystem umfasst.

2. Schaltvorrichtung (1) zum Schalten eines Motors (9) nach Anspruch 1, **dadurch gekennzeichnet, dass** die Positionsmesseinrichtung (2) dazu ausgestaltet ist, eine Umdrehung des drehangetriebenen Bauelements (5, 13, 16) zu erfassen.

3. Schaltvorrichtung (1) zum Schalten eines Motors (9) nach einem der vorangegangenen Ansprüche, **dadurch gekennzeichnet, dass** die Schaltvorrichtung (1) dazu ausgelegt ist, eine Stellung des Bauelements (5, 13, 16) auszugeben.

4. Schaltvorrichtung (1) zum Schalten eines Motors (9) nach einem der vorangegangenen Ansprüche, **dadurch gekennzeichnet, dass** die Schaltvorrichtung (1) ein Tastelement (25) umfasst, mittels welchem ein Monteur der Schaltvorrichtung (1), bei einer Installation der Schaltvorrichtung (1), eine Position, insbesondere Endposition des Bauelements (5, 13, 16) anlernen kann.

5. Schaltvorrichtung (1) zum Schalten eines Motors (9) nach einem der vorangegangenen Ansprüche, **dadurch gekennzeichnet, dass** die Energieversorgung des Motors (9) durch die Schaltvorrichtung (1) geführt ist.

6. Schaltvorrichtung (1) zum Schalten eines Motors (9) nach einem der vorangegangenen Ansprüche, **dadurch gekennzeichnet, dass** die Schaltvorrichtung (1), insbesondere die Auswerteeinheit (3), derart ausgestaltet ist, dass in einer, insbesondere je Umdrehungsrichtung des Bauelements (5, 13, 16) zwei voneinander unabhängige Signalausgänge vorhanden sind.

7. Getriebe mit einer Schaltvorrichtung (1) nach einem der vorangegangen Ansprüche.

8. Motor (9) mit einer Schaltvorrichtung (1) nach einem der Ansprüche 1 bis 6.

9. Getriebemotor mit einer Schaltvorrichtung (1) nach einem der Ansprüche 1 bis 6, **dadurch gekennzeichnet, dass** der Motor (9) ein Getriebe aufweist.

10. Antriebssystem (10, 11), **dadurch gekennzeichnet, dass** das Antriebssystem (10, 11) eine Schaltvorrichtung (1) nach einem der Ansprüche 1 bis 6, einen Getriebemotor und vom Getriebemotor angetriebene Bauelemente umfasst.

11. Schaltvorrichtung (1) zum Schalten eines Motors (9) nach einem der Ansprüche 1 bis 6, **dadurch gekennzeichnet, dass** die Auswerteeinheit (3) dazu ausgestaltet, eine Zustandsüberwachung eines Antriebssystems (10, 11) nach Anspruch 10 auszuführen, auszuwerten und danach ggf. eine Aktion, insbesondere durch die Ausgabeeinheit (4) vorzunehmen.

## Claims

1. Switching device (1) for switching an electric motor (9), wherein the switching device (1) is arranged on a component (5, 13, 16) which is driven in rotation by the motor (9), wherein a contactless, absolute position-measuring device (2), an evaluation unit (3) for evaluating position signals and an output unit (4) for outputting switching information for indirectly switching and/or directly switching the motor current as a function of a position signal are provided within a single housing (12, 17), **characterized in that** the position-measuring device (2) is designed to supply itself with power on the basis of a rotational movement of the component (5, 13, 16), so that when the external supply power is switched off the position-measuring device (2) senses a position of the component (5, 13, 16) which is driven in rotation absolutely, wherein the switching device (1) comprises a buffered internal electrical energy system.

2. Switching device (1) for switching a motor (9) according to Claim 1, **characterized in that** the position-measuring device (2) is configured to sense a rotation of the component (5, 13, 16) which is driven in rotation.

3. Switching device (1) for switching a motor (9) according to either of the preceding claims, **characterized in that** the switching device (1) is configured to output a position of the component (5, 13, 16) .

4. Switching device (1) for switching a motor (9) according to one of the preceding claims, **characterized in that** the switching device (1) comprises a sensing element (25) by means of which a fitter of the switching device (1) can teach a position, in particular limit position of the component (5, 13, 16), during installation of the switching device (1).

5. Switching device (1) for switching a motor (9) according to one of the preceding claims, **characterized in that** the power supply of the motor (9) is conducted through the switching device (1).

6. Switching device (1) for switching a motor (9) according to one of the preceding claims, **characterized in that** the switching device (1), in particular the evaluation unit (3), is configured in such a way that in one direction of rotation, in particular in each direction of rotation, of the component (5, 13, 16) there are two signal outputs which are independent of one another.

7. Transmission having a switching device (1) according to one of the preceding claims.

8. Motor (9) having a switching device (1) according to one of Claims 1 to 6.

9. Geared motor having a switching device (1) according to one of Claims 1 to 6, **characterized in that** the motor (9) has a transmission.

10. Drive system (10, 11), **characterized in that** the drive system (10, 11) comprises a switching device (1) according to one of Claims 1 to 6, a geared motor and components driven by the geared motor.

11. Switching device (1) for switching a motor (9) according to one of Claims 1 to 6, **characterized in that** the evaluation unit (3) is configured to execute and evaluate a status monitoring process of a drive system (10, 11) according to Claim 10, and subsequently to perform, if appropriate, an action, in particular by means of the output unit (4).

## Revendications

1. Dispositif de commutation (1) destiné à commuter un moteur électrique (9), le dispositif de commutation (1) étant disposé au niveau d'un composant (5, 13, 16) entraîné en rotation par le moteur (9), un moyen de mesure de position absolue sans contact (2), une unité d'évaluation (3) destinée à évaluer des signaux de position et une unité de sortie (4) destinée à délivrer en sortie une information de commutation destinée à la commutation indirecte et/ou à la commutation directe du courant du moteur en fonction d'un signal de position étant prévus à l'intérieur d'un boîtier unique (12, 17), **caractérisé en ce que** le moyen de mesure de position (2) est conçu pour s'alimenter en énergie sur la base d'un mouvement de rotation du composant (5, 13, 16) de sorte que, lorsque l'énergie d'alimentation externe est coupée, le moyen de mesure de position (2) détecte de manière absolue une position du composant (5, 13, 16) entraîné en rotation, le dispositif de commutation (1) comprenant un système d'énergie électrique interne tamponné.

2. Dispositif de commutation (1) destiné à la commutation d'un moteur (9) selon la revendication 1, **caractérisé en ce que** le moyen de mesure de position (2) est conçu pour détecter une révolution du composant (5, 13, 16) entraîné en rotation.

3. Dispositif de commutation (1) destiné à la commutation d'un moteur (9) selon l'une des revendications précédentes, **caractérisé en ce que** le dispositif de commutation (1) est conçu pour délivrer une position du composant (5, 13, 16).

4. Dispositif de commutation (1) destiné à la commutation d'un moteur (9) selon l'une des revendications précédentes, **caractérisé en ce que** le dispositif de commutation (1) comprend un élément de bouton-poussoir (25) permettant à un monteur du dispositif de commutation (1), lors de l'installation du dispositif de commutation (1), de connaître une position, en particulier la position finale du composant (5, 13, 16).

5. Dispositif de commutation (1) destiné à la commutation d'un moteur (9) selon l'une des revendications précédentes, **caractérisé en ce que** l'alimentation en énergie du moteur (9) est effectuée par le biais du dispositif de commutation (1).

6. Dispositif de commutation (1) destiné à la commutation d'un moteur (9) selon l'une des revendications précédentes, **caractérisé en ce que** le dispositif de commutation (1), notamment l'unité d'évaluation (3), est conçu de telle sorte que deux sorties de signal indépendantes soient disponibles dans un, notamment dans chaque, sens de rotation du composant (5, 13, 16).

7. Transmission comprenant un dispositif de commutation (1) selon l'une des revendications précédentes.

8. Moteur (9) comprenant un dispositif de commutation (1) selon l'une des revendications 1 à 6.

9. Réducteur mécanique comprenant un dispositif de commutation (1) selon l'une des revendications 1 à 6, **caractérisé en ce que** le moteur (9) comporte une transmission.

10. Système d'entraînement (10, 11), **caractérisé en ce que** le système d'entraînement (10, 11) comprend un dispositif de commutation (1) selon l'une des revendications 1 à 6, un réducteur mécanique et des composants entraînés par le réducteur mécanique.

11. Dispositif de commutation (1) destiné à la commutation d'un moteur (9) selon l'une des revendications 1 à 6, **caractérisé en ce que** l'unité d'évaluation (3) est conçue pour effectuer une surveillance d'état d'un système d'entraînement (10, 11) selon la revendication 10, l'évaluer puis éventuellement effectuer une action, notamment par le biais de l'unité de sortie (4).
